(19) Europäisches Patentamt
European Patent Office
Office européen des brevets

(11) Publication number: 0 166 798 A1

# (12) EUROPEAN PATENT APPLICATION

(21) Application number: 84107685.4

(22) Date of filing: 03.07.84

(51) Int. Cl.[4]: C 04 B 24/00

(43) Date of publication of application: 08.01.86 Bulletin 86/2

(84) Designated Contracting States: DE FR GB NL

(71) Applicant: THE DOW CHEMICAL COMPANY
2030 Dow Center Abbott Road P.O. Box 1967
Midland, MI 48640(US)

(72) Inventor: Crump, Druce K.
142 Oyster Creek Drive 48
Lake Jackson Texas, 77566(US)

(72) Inventor: Wilson, David A.
229 San Saba
Richwood Texas, 77531(US)

(74) Representative: Casalonga, Axel et al,
BUREAU D.A. CASALONGA OFFICE JOSSE & PETIT
Baaderstrasse 12-14
D-8000 München 5(DE)

## (54) Set retarding additives for cement from aminomethylenephosphonic acid derivatives.

(57) Compounds useful as cement set retarding additives have been found which have the formula

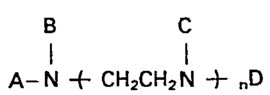

wherein (a) n is 0 to 15; (b) A, B, C, and D are each independently selected from (i) hydrogen; (ii) methylenephosphonic acid and salts thereof; (iii) 2-hydroxy-3(trialkylammonium halide) propyl moieties wherein each alkyl moiety has from 1 to 5 carbon atoms; and (iv) a moiety of the formula

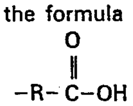

wherein R is an unsubstituted or inertly substituted alkyl group having 1 to 6 carbon atoms, or salts thereof; such that at least one of A, B, C, and D is (ii) and at least one is (iii).

EP 0 166 798 A1

0166798

# SET RETARDING ADDITIVES FOR CEMENT FROM AMINOMETHYLENEPHOSPHONIC ACID DERIVATIVES

Hydrophobic-substituted phosphonic or phosphinic acids and their alkali metal salts have been used in cements, primarily soil/cement mixtures, to improve the freeze-thaw properties and salt-resistance. Six- to eighteen-carbon alkyl phosphonic acids or their alkali metal salts are so described in U.S. Patent 3,794,506. A plugging mixture for high temperature oil and gas wells comprising Portland cement and 1-hydroxy ethylidene-phosphonic acid trisodium or tripotassium salts as set time extenders is described in Derwent abstract 71376B/39 (1979) of USSR Patent 640,019. The use of these phosphonate salts at temperatures of 75° to 150°C in amounts of 0.1-0.3 percent by weight is described in the abstract.

Other organic phosphorous acid derivatives are taught to be useful additives in cement compositions as turbulence-inducing and flow-property improved additives (U.S. 3,964,921 and 4,040,854, respectively). Another turbulence-inducer is a pyrolysis product of urea and a bis(alkylenepyrophosphate) (U.S. 3,409,080).

Alkylene diphosphonic acids and their water soluble salts are described as set time extenders and water reducing agents for gypsum plasters (U.S. 4,225,361).

Lignins which have been phosphonoalkylated through an ether linkage or corresponding sulfonates, sulfides, hydroxyl or amine derivatives are taught to be useful primarily as dispersants or surfactants (U.S. 3,865,803) and are also said to be useful as "cement additives" without indicating specific uses.

Ultra-rapid hardening Portland cement compositions are described which contain various acid salt additives (U.S. 4,066,469). It states that use of acid phosphates as the acid salt additives is excluded since the phosphates have a characteristically powerful retarding property peculiar to them.

Most of the cement used in oil wells is called portland cement. Portland cement is manufactured by calcining raw materials consisting of limestone, clay, shale, and slag together at 2,600° to 2,800° F in a rotary kiln.

The resulting material, is cooled and interground with small percentages of gypsum to form portland cement. In addition to the above raw materials, other components such as sand, bauxite, iron oxide, etc., may be added to adjust the chemical composition depending upon the type of portland cement desired.

The principal components of the finished portland cement are lime, silica, alumina, and iron. These components form the following complex compounds: Tricalcium aluminate, ($3CaO \cdot Al_2O_3$), tetracalcium aluminoferrite, ($4CaO \cdot Al_2O_3 \cdot Fe_2O_3$), tricalcium silicate, ($3CaO \cdot SiO_2$), and dicalcium silicate, ($2CaO \cdot SiO_2$).

When water is added to cement, setting and hardening reactions begin immediately. The chemical compounds in the cement undergo the processes of hydration and recrystallization which results in a set product. The maximum amount of water that can be used with an oil-well cement is the amount which can be added before solids separation occurs. The minimum amount of water is the amount required to make the slurry pumpable. Therefore, the normal water ratio is governed by the maximum and minimum limits for a particular class of cement.

Thickening time is the time that the cement remains pumpable in the well. This is the most critical property of an oil-well cement. The thickening time has to be long enough to be pumped into place and short enough to permit operations to resume quickly. Generally, 3 hours provides the necessary placement time plus a safety factor.

Other factors, such as fluid loss, viscosity and density must be taken into consideration and additives are known to the art-skilled which affect each of these factors as well as that of set, or thickening, time as mentioned above. Another parameter which has an effect on set time is temperature. Cement sets more rapidly as the temperature increases. This must be taken into consideration particularly when pumping cement into deeper wells since temperature increases as the depth of the well becomes greater. Temperature also affects the strength of the cement, the strength becoming less as the temperature increases.

Because of this temperature effect, it is important to retard the setting of the cement employed in the deeper wells.

It has now been discovered that certain new compounds are useful in aqueous cement slurries as set retarding additives.

These compounds have the formula

$$A-\overset{B}{\overset{|}{N}}-(CH_2CH_2\overset{C}{\overset{|}{N}})_n-D$$

wherein substituents A, B, C and D are each independently selected from hydrogen; methylenephosphonic acid or salts thereof; 2-hydroxy-3(trialkylammonium halide) propyl wherein each alkyl moiety contains from 1 to 5 carbon atoms; a moiety of the formula

$$-R-\overset{O}{\overset{\|}{C}}-OH$$

wherein R is an unsubstituted or inertly substituted alkyl group having 1 to 6, preferably 1 to 3, more preferably 1 carbon atoms, or salts thereof; n is 0 to 15; and wherein said substituents include at least one methylenephosphonic acid group, or salt thereof, and at least one 2-hydroxy-3(trialkylammonium halide) propyl group.

The compounds useful in the present invention are substituted ammonia and amines in which at least one of the amine hydrogens is substituted with a methylenephosphonic acid group or salts thereof and at least one with a quaternary ammonium radical.

It has now been discovered that such a functionality when attached to a diamine or polyamine which also contains a methylenephosphonic acid group will when added to an aqueous cement slurry retard the setting of the cement.

The following describes a typical preparation of the compounds useful in the present invention.

Example 1

Ethylenediamine (EDA) (15 g, 0.25 mole) and 94 g (0.25 mole) of a 50 percent aqueous solution of 3-chloro-2-hydroxypropyltrimethylammonium chloride were added to a 500 ml round-bottom reaction flask equipped with a water-cooled reflux condenser, mechanical stirrer, thermometer with a temperature controller, and an addition funnel. The reaction mixture was heated to 90°C and digested for about one hour and cooled. Approximately 60 g of concentrated hydrochloric acid solution and 67.5 g (0.82 mole) of phosphorous acid were added to the reaction flask and heated to reflux and maintained for one hour. Aqueous 37 percent formaldehyde solution (67.4 g, 0.83 mole) was weighed into the addition funnel and added over a two-hour period. The reaction mixture was heated at reflux for an additional three hours and then cooled. The product was the derivative of EDA in which one hydrogen had been replaced with a 2-hydroxypropyltrimethylammonium chloride group and the remaining hydrogens with methylenephosphonic acid groups.

EXAMPLE 2

Ethyleneamine E-100* (12.5 g) and 12.5 g of deionized water were added to a 500-ml round-bottom reaction flask as in Example 1 and heated to 90°C. A 50 percent aqueous solution of 3-chloro-2-hydroxypropyltrimethylammonium chloride (12.0, 0.032 mole) was weighed into the addition funnel and added over about a 10-minute period. The reaction mixture was heated for an additional hour at 90°C and cooled. Approximately 110 g of concentrated hydrochloric acid solution and 28.5 g (0.35 mole) of phosphorous acid were added to the reaction flask and heated to reflux and maintained for one hour. Aqueous 37 percent formaldehyde solution (24.5, 0.30 mole) was weighed into the addition funnel and added over a one-hour period. The reaction mixture was heated at reflux for an additional three hours and then cooled. The product was the E-100 derivative in which ~10 percent of the amine hydrogens had been replaced with hydroxypropyltrimethylammonium chloride groups, the remainder being replaced with methylenephosphonic acid groups.

The above and other related compounds were determined to be useful as cement retarders by employing the following test.

1. The following ingredients were weighed:
cement - 100 g
water - 38 g
additive - 0.2 g (active ingredient mass)

*Ethyleneamine E-100 is a product of The Dow Chemical Company and is described as a mixture of pentaethylenehexamine plus heavier ethyleneamines with an average molecular weight of 250-300.

2. Water and liquid additive were mixed;
3. Cement was added to liquid, the bottle tightly closed and shaken to mix;
4. Bottle was placed in a pre-heated 180°F bath;
5. Setting of cement was checked after 6 and 24 hours.

A blank (no additive) was run for comparison with each of the additives.

The compounds listed in Table I were prepared and tested using the above procedure. Results of these tests on retarding cement setting are given in Table I.

0166798

TABLE I

| From Example | Sample | Derived from | No. of Quat. Groups | No. of MePhos. Groups | Other Groups | Time of Observation 6 hrs. | Time of Observation 24 hrs. |
|---|---|---|---|---|---|---|---|
| 1 | A | EDA | 1 | 3 | -- | retarding, not set | retarding, not set |
| | B | EDA | 2 | 2 | -- | " " | " " |
| | C | DETA | 1 | 3 | 1 (acetic) $-CH_2COOH$ | " " | " " |
| | D | $NH_3$ | 1 | 2 | -- | " " | " " |
| | E | E-100 | 5 mole% | 95 mole% | -- | " " | " " |
| 2 | F | E-100 | 10 mole% | 90 mole% | -- | " " | " " |
| | G | E-100 | 15 mole% | 85 mole% | -- | " " | " " |
| | H* | No additive | -- | -- | -- | set | -- |

* Not an example of the invention.

In a manner similar to Examples 1 and 2, another compound useful in the invention is prepared.

EXAMPLE 3

An aqueous polymeric polyalkylenepolyamine (PAPA) solution (66.4 g of 36 percent), prepared from ethyleneamine E-100 and ethylene dichloride, was added to a 500-ml round-bottom reaction flask equipped as in Example 1. Approximately 40 g of concentrated hydrochloric acid solution and 49.3 g (0.60 mole) of phosphorous acid were added to the reaction flask and heated to reflux and maintained for one hour. Aqueous 37 percent formaldehyde solution (51.1 g, 0.63 mole) was weighed into the addition funnel and added over a one-hour period. The reaction mixture was heated at reflux for an additional one and one-half hours and cooled. The intermediate product was the PAPA in which all amine hydrogens had been substituted with methylenephosphonic acid groups. The polymeric polyalkylenepolyamine intermediate product was modified by reacting ten mole percent of the available aminohydrogens with 3-chloro-2-hydroxypropyltrimethylammonium chloride in a similar manner as described in Example 3. The resultant reaction product was then phosphonomethylated with phosphorous acid and formaldehyde in the presence of hydrochloric acid. The product was the PAPA in which ~10 percent of the amine hydrogens had been replaced with hydroxypropyltrimethylammonium chloride groups, the remainder being replaced with methylenephosphonic acid groups.

0166798

1. In a process for retarding the setting of an aqueous cement slurry which comprises adding to said slurry an organic phosphonate, the improvement which comprises employing as the organic phosphonate a compound of the formula

$$A-\overset{B}{\overset{|}{N}}-(CH_2CH_2\overset{C}{\overset{|}{N}})_n-D$$

wherein

(a) n is 0 to 15;

(b) A, B, C, and D are each independently selected from

(i) hydrogen;

(ii) methylenephosphonic acid and salts thereof;

(iii) 2-hydroxy-3(trialkylammonium halide) propyl moieties wherein each alkyl moiety has from 1 to 5 carbon atoms; and

(iv) a moiety of the formula

$$-R-\overset{O}{\overset{\|}{C}}-OH$$

wherein R is an unsubstituted or inertly substituted alkyl group having 1 to 6 carbon atoms, or salts thereof;

such that at least one of A, B, C, and D is (ii) and at least one is (iii).

2. The process of Claim 1 wherein the compound employed has the formula in which n is 0 or 1 and at least two of A, B, C, and D are (ii).

3. The process of Claim 1 wherein the compound employed has the formula in which n is 0, 1 or 2; one of A, B, C, and D is (iii), one is (iv), and any other of A, B, C, and D is (ii).

4. The process of Claim 1 wherein the compound employed is a polyamine having an average molecular weight of 250-300.

5. The process of Claim 4 wherein from 5 to 15 mole percent of the substituent groups are (iii) and the remainder are (ii).

6. The process of Claim 5 wherein the substituent acid groups are in the form of the alkali metal or phosphoric alkaline earth metal salt.

7. The process of Claim 6 wherein the alkali metal salt is the sodium salt.

8. Aqueous cement slurry characterized in that it comprises an organic phosphonate as defined in anyone of claims 1 to 7.

European Patent Office

# EUROPEAN SEARCH REPORT

0166798

Application number

EP 84 10 7685

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| X | FR-A-2 103 355 (HENKEL & CIE GMBH)<br>* Whole document *<br>--- | 1,2 | C 04 B 24/00 |
| X | US-A-3 346 488 (J.W. LYONS et al.)<br>* Whole document * | 1,2 | |
| A | | 3 | |
| | --- | | |
| A | CHEMICAL ABSTRACTS, vol. 97, no. 4, 26th July 1982Columbus, Ohio, USA; page 143, column 1, abstract no. 26178s & SU-A-907221 (P.D. ALEKSEEV et al.) 23-02-1982<br>--- | 1,2 | TECHNICAL FIELDS SEARCHED (Int. Cl 4) |
| A | US-A-3 941 772 (W. PLOGER et al.)<br>* Claims 1,7 *<br>--- | 1,6 | C 04 B 24/00 |
| A | FR-A-2 411 810 (MANUFACTURE DE PRODUITS CHIMIQUES PROTEX)<br>* Claims 1-3 *<br>----- | 1,6 | |

The present search report has been drawn up for all claims

| Place of search | Date of completion of the search | Examiner |
|---|---|---|
| BERLIN | 14-02-1985 | STROUD J.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82